# EUROPEAN PATENT APPLICATION

(11) **EP 2 026 555 A2**
(43) Date of publication of application: **18.02.2009**
(21) Application number: 08103233.6
(22) Date of filing: 31.03.2008
(51) Int. Cl.: H04N 1/04

(54) **Light scanning unit, control method thereof and image forming apparatus having the same**

(30) Priority: 06.08.2007 KR 20070078788
(71) Applicant: Samsung Electronics Co., Ltd., Suwon-si, Gyeonggi-do 442-742 (KR)
(72) Inventor: Kim, Se-Tae, Seoul (KR)
(74) Representative: Perkins, Dawn Elizabeth

(57) **Abstract**

A light scanning unit, a method of controlling, and an image forming apparatus having the same are provided. The light scanning unit includes: a light source; a beam deflector which reciprocally scans a light beam radiated from the light source to form an image range and a first non-image range and a second non-image range on opposite sides of the image range; a reflecting member which reflects a light beam deflected from the beam deflector to the first non-image range; and a sensor which senses the light beam deflected from the beam deflector to the second non-image range and the light beam reflected on the reflecting member.

## Description

Apparatuses and methods consistent with the present invention relate to a light scanning unit, a control method thereof, and an image forming apparatus having the same, and more particularly, to a light scanning unit capable of recognizing a scanning direction of a light beam being reciprocally scanned by a beam deflector, a control method thereof, and an image forming apparatus having the same.

A light scanning unit in an image forming apparatus, such as a laser beam printer, a digital copier, a fax machine, and/or the like, deflects a light beam radiated from a light source to be scanned across the surface of a photosensitive body. This scanning of the light by the light scanning unit together with the additional scanning of the light due to the movement of the photosensitive body form an electrostatic latent image on the photosensitive body.

The light scanning unit may include a beam deflector to deflect a light beam, and may be classified into one of a unidirectional scanning type and a bidirectional scanning type. A unidirectional scanning type light scanning unit may, e.g., employ a polygon mirror, and scans the light beam across the photosensitive body in one direction, A bidirectional scanning type light scanning unit on the other hand, may, for example, employ a resonant mirror, and scans the light beam in a reciprocating manner, in both directions across the photosensitive body. Unlike the unidirectional scanning type light scanning unit, in a bidirectional scanning type light scanning unit, the direction and/or the periods of the scanning of the light beam needs to be taken into consideration when an image signal is encoded in the light beam to form the image.

To detect the current scanning direction, in a conventional light scanning unit, two or more sensors are disposed in the scanning area to detect the light beam from the beam deflector. When a light beam is detected by the two sensors, the sensors output different signals, respectively. Accordingly, the light scanning unit recognizes a scanning direction of the light beam, thereby applying an image signal corresponding to the scanning direction.

However, the inclusion of the multiple sensors in conventional light scanning units may adversely impact the material and manufacturing cost, and/or may unnecessarily increase the size and/or the complexity of the light scanning unit.

Accordingly, it is an aspect of the present invention to provide a light scanning unit utilizing a single sensor yet capable of detecting the direction of bidirectional scanning of light beam by a beam deflector, a control method thereof, and an image forming apparatus having the same.

Additional aspects of the present invention will be set forth in part in the description which follows and, in part, will be obvious from the description, or may be learned by practice of the present invention.

The foregoing and/or other aspects of the present invention can be achieved by providing a light scanning unit that includes a light source for producing a light beam; a beam deflector configured to deflect the light beam from the light source such that the deflected light beam is scanned along a scan line across a photosensitive body in a first and second scanning directions; and a sensor configured to produce an output signal upon sensing of the light beam deflected from the beam deflector, the sensor further being configured to produce a first output signal pattern when the deflected light beam is being scanned in the first scanning direction and a second output signal pattern, different from the first output signal pattern, when the deflected light beam is being scanned in the second scanning direction.

The foregoing and/or other aspects of the present invention can be also achieved by providing a method of controlling a light scanning unit, comprising: driving a beam deflector deflect a light beam from a light source such that the deflected light beam is scanned along a scan line in a first scanning direction and a second scanning direction; receiving from a sensor an output signal pattern, the output signal pattern being one of a first output signal pattern when the deflected light beam is being scanned in the first scanning direction and a second output signal pattern, different from the first output signal pattern, when the deflected light beam is being scanned in the second scanning direction, the output signal pattern being a pattern of output signals of the sensor that in response to sensing of the deflected light beam incident thereon produces an output signal; determining a scanning direction of the deflected light beam as being one of the first scanning direction and the second scanning direction based on which one of the first output signal pattern and the second output signal pattern is observed; and controlling the light source to produce the light beam according to an image information corresponding to the determined scanning direction of the deflected light beam.

The above and/or other aspects of the present invention will become apparent and more readily appreciated from the following description of the embodiments, taken in conjunction with the accompanying drawings, in which:
FIG. 1 is a perspective view of a light scanning unit according to an embodiment of the present invention;
FIG. 2 is a schematic view to illustrate the path of deflection of a light beam in the light scanning unit in FIG. 1;
FIG. 3 is a graph to illustrate the scanning of the light beam in relation to the driving frequency of the beam deflector and the cycle of the sensor output signal in the light scanning unit in FIG. 2;
FIG. 4 is a flow chart to illustrate the operation of the light scanning unit; and
FIG. 5 is a sectional view of an image forming apparatus according to an embodiment of the present invention.

Reference will now be made in detail to the embodiments of the present invention, examples of which are illustrated in the accompanying drawings, wherein like reference numerals refer to like elements throughout.

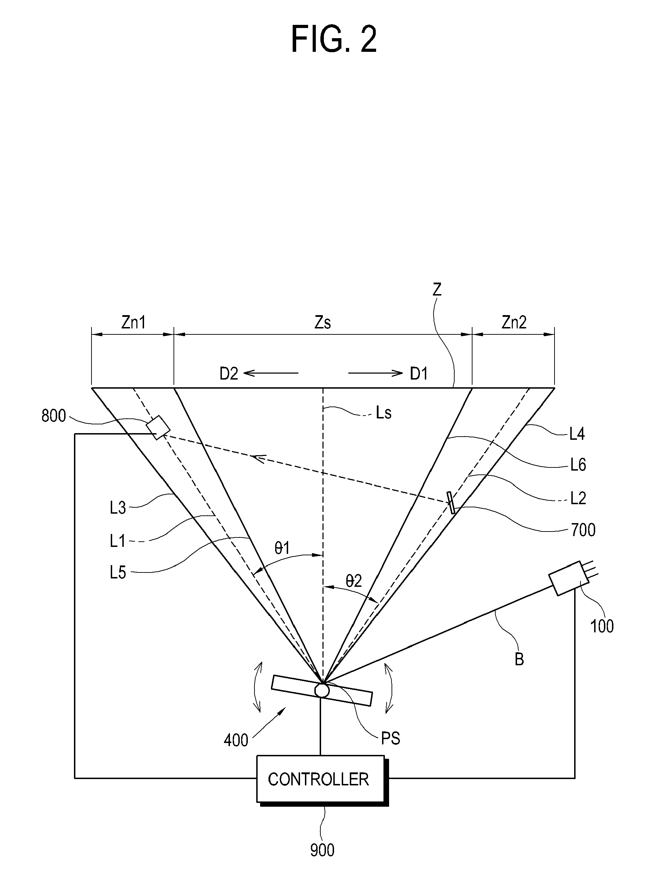

It should be noted that for the sake of clarity only those relevant elements of the light scanning unit is shown in FIG. 2.

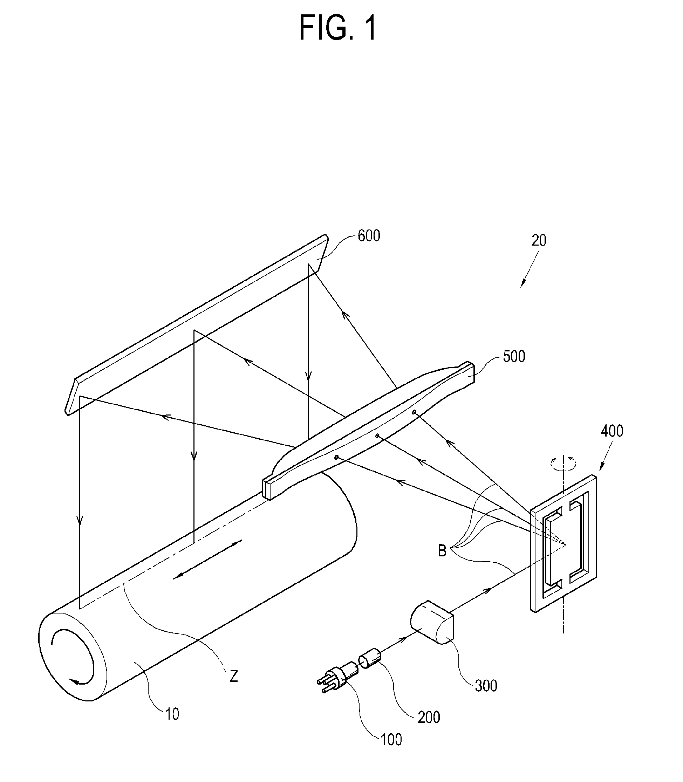

As illustrated in FIGs. 1 and 2, a light scanning unit 20 according to an exemplary embodiment of the present invention scans a light beam (B) in a horizontal scanning direction to a photosensitive body 10, which moves in a vertical scanning direction. Also, the light scanning unit 20 bi-directionally scans the light beam (B) in the horizontal scanning direction, thereby forming a scanning line (Z) on the photosensitive body 10.

The scanning line (Z) may be divided into one or more image ranges and one or more non-image range. In the illustrated example, two non-image ranges, a first non-image range (Zn1) and a second non-image range (Zn2) at opposite ends of a single continuous image range (Zs) are shown. In this example, the image range (Zs) is in the middle section of the scanning line (Z), and defines the scanning range across which the light beam (B) carries predetermined image information. The first and second non-image ranges (Zn1 and Zn2) are ranges across which the light beam (B) carries no image information. In an embodiment, the first and second non-image ranges (Zn1 and Zn2) may have the same length. FIG. 2 illustrates that the first non-image range (Zn1) and the second non-image range (Zn2) are disposed respectively on the right and left sides of the single image range (Zs), but other configurations may be also be possible. The non-image ranges (Zn1 and Zn2) are illustrated for convenience only to be distinguished from the image range (Zs). The light scanning unit 20 may also include a light source 100 to generate the light beam (B) and a beam deflector 400, which deflects the light beam (B) radiated from the light source 100 toward the photosensitive body 10 to form the scanning line (Z).

The light scanning unit 20 may further include a reflecting member 700 which reflects the light beam (B) radiated toward the second non-image range (Zn2) from the beam deflector 400, a sensor 800 which senses the light beam (B) from the beam deflector 400 directed toward the first non-image range (Zn1) and also the light beam (B) reflected off the reflecting member 700 to output an output signal, and a controller 900, which determines a scanning direction of the light beam (B) on the basis of the output signal from the sensor 800, and which may cause the light source 100 to produce light beam (B) carrying appropriate image information.

While for the sake of convenient illustration and to aid understanding, references are made to several locations, paths of the light beam and the relationships therebetween in FIG. 2, and are explained below, it should be understood that these references do not limit the scope of the principles of the present embodiments.
The reference point (Ps) is a position on the beam deflector 400 where the light beam (B) radiated from the light source 100 is incident. The reference line (Ls) refers to a straight line from the reference point (Ps) to the center of the image range (Zs).

A first scanning direction (D1) refers to a direction from the first non-image range (Zn1) to the second non-image range (Zn2), i.e., a rightward direction in FIG. 2. A second scanning direction (D2) is an opposite direction to the first scanning direction (D1), i.e., a leftward direction in FIG. 2.

A first line (L1) is a straight line connecting the reference point (Ps) and the sensor 800, and a second line (L2) is a straight line connecting the reference point (Ps) and the reflecting member 700.

A third line (L3) is a straight line connecting the reference point (Ps) and the furthest end of the first non-image range (Zn1) from the image range (Zs), i.e., a line connecting the end of the scanning line (Z) in the second scanning direction (D2) and the reference point (Ps). A fourth line (L4) is a straight line connecting the reference point (Ps) and the furthest end of the second non-image range (Zn2) from the image range (Zs), i.e., a line connecting the end of the scanning line (Z) in the first scanning direction (D1) and the reference point (Ps).

A fifth line (L5) is a straight line connecting the reference point (Ps) and the end of the image range (Zs) neighboring the first non-image range (Zn1), i.e., a line connecting the end of the image range (Zs) in the second scanning direction (D2) and the reference point (Ps). A sixth line (L6) is a straight line connecting the reference point (Ps) and the end of the image range (Zs) neighboring the second non-image range (Zn2), i.e., a line connecting the end of the image range (Zs) in the first scanning direction (D1) and the reference point (Ps).

The light source 100 generates at least one light beam (B), and may be turned on or off under the control of the controller 900 according to an image information to be carried by the light beam (B). The light source 100 may be provided as a semiconductor element such as laser diodes or the like. The light source 100 may radiate a single beam or multi beams depending on its configuration. For example, a semiconductor element having a plurality of light emitting portions may be capable of producing multi beams at the same time.

The light source 100 is controlled by the controller 900 to produce light beam (B) having encoded therein image information corresponding to the first scanning direction (D1) and the second scanning direction (D2). That is, when the light beam (B) is scanned across the image range (Zs) in the first scanning direction (D1), the light source 100 is supplied with image information corresponding to the first scanning direction (D1). On the other hand, when the light beam (B) is scanned across the image range (Zs) in the second scanning direction (D2), the light source 100 is supplied with image information corresponding to the second scanning direction (D2). However, when the light beam (B) is scanned across the first non-image range (Zn1) and the second non-image range (Zn2), the light source 100 is not intended to carry any image information.

The beam deflector 400 reciprocates to scan the light beam (B) radiated from the light source 100, more particularly, to scan in the first scanning direction (D1) and the opposite direction thereof, i.e., the second scanning direction (D2), to form the scanning line (Z) on the photosensitive body 10. For this operation, the beam deflector 400 may be provided as a resonant mirror type. A resonant mirror type beam deflector can be made to vibrate or reciprocate at a predetermined resonant frequency, i.e., a driving frequency, to scan the light beam back and forth.

Reciprocating beam deflectors are known to those skilled in the art, and thus, detailed description thereof is omitted herein.

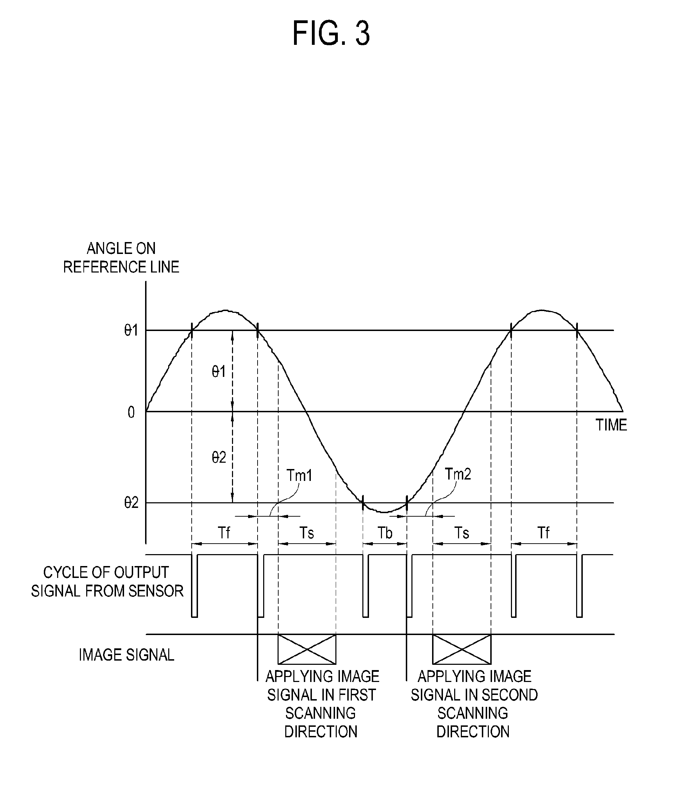

Variations on angles formed between the light beam (B) deflected off the beam deflector 400 and the reference line (Ls) with the passage of time form a sine wave with a constant frequency as, e.g., illustrated in FIG. 3. Once the driving frequency of the beam deflector 400 reaches the stable operational state, a substantially constant driving frequency can be observed from the beam deflector 400 as the sinusoidal curve illustrated in FIG. 3. From the graph shown in FIG. 3, variations of the scanning angle of the light beam (B) and/or the time the light beam (B) takes to move to and from various points on the scanning line (Z) can be calculated.
In an embodiment, a collimating lens 200 and a cylindrical lens 300 may further be provided along the path of the light beam (B) between the light source 100 and the beam deflector 400. An f-θ lens 500 and a scanning line reflecting mirror 600 can also be installed on the passage of the light beam (B) between the beam deflector 400 and the photosensitive body 10.

The collimating lens 200 collects the light beam (B) radiated from the light source 100 to form a convergent and parallel light. The cylindrical lens 300 is a lens which has a predetermined refractive power only in the vertical scanning direction, and provides the light beam (B) received from the collimating lens 200 in a linear form to the beam deflector 400.

The f-θ lens 500 may be formed of one or more lenses, and has an incident side and an exiting side. The f-θ lens 500 compensates for the differences in optical lengths the beam deflected from the beam deflector 400 would have to reach various points along the scanning line (Z) on the photosensitive body 10.

The scanning line reflecting mirror 600 is provided to redirect the light beam (B) from the beam deflector 400 toward the photosensitive body 10.

In the embodiment illustrated in FIG. 2, the reflecting member 700 is disposed between the fourth line (L4) and the sixth line (L6) and reflects the light beam (B) scanned along the second line (L2) toward the sensor 800. The reflecting member 700 to reflect the light beam (B) is not limited to the configuration shown, and may also be provided as a specula mirror on one side thereof where the light beam (B) is incident.

The sensor 800, in this embodiment, is disposed between the third line (L3) and the fifth line (L5), and senses the light beam (B) scanned along the first line (L1) and also the light beam (B) reflected off the reflecting member 700 to output a signal. While the light beam (B) keeps being scanned, the sensor 800 continually senses the light beam (B), and outputs the signal. The sensor 800 may be provided as a photo sensor or the like. The sensor 800 transmits the output signal to the controller 900, which calculates a cycle of the output signals received from the sensor 800.

One single sensor 800 is provided to sense both the light beam (B) scanned along the first line (L1) and the light beam (B) reflected off the reflecting member 700, but the same output signal is produced in both cases. That is, it may not be possible to determine whether the sensed light beam (B) is located on the first line (L1) or on the second line (L2) with only the output signal from the sensor 800.

If the angle between the first line (L1) and the reference line (Ls) is defined as a first angle (θ1), and if the angle between the second line (L2) and the reference line (Ls) is defined as a second angle (θ2), the first angle (θ1) and the second angle (θ2), in this embodiment, are set to be different by appropriately arranging the sensor 800, reflecting member 700 and/or the beam reflector 400.

As the first non-image range (Zn1) and the second non-image range (Zn2), in this example, have the same length, the angle between the first line (L1) and the third line (L3) and the angle between the second line (L2) and the fourth line (L4) are different. Accordingly, if the time during which the light beam (B) moves from the first line (L1) to the third line (L3) and returns to the first line (L1) is defined as Tf, and if the time during which the light beam (B) moves from the second line (L2) to the fourth line (L4) and returns to the second line (L2) is defined as Tb, Tf and Tb are different as well. By this difference between Tf and Tb, it can be recognized whether the light beam (B) is located on the first line (L1) or on the second line (L2).

The controller 900 calculates a cycle of the output signals received from the sensor 800, and determines a scanning direction of the light beam (B) on the basis of the calculated cycle. The controller 900 controls the light source 100 (i.e., turning it on and off) based on the correspondent image information, taking into account the determined scanning direction. The controller 900 determines the driving frequency of the beam deflector 400. The controller 900 also determines the respective times during which the light beam (B) travels between each of the first line (L1) to the sixth line (L6) on the basis of the driving frequency and the cycle of the output signals from the sensor 800.

In addition to the times Tf and Tb as previously mentioned, the time, Tm1, during which the light beam (B) travels from the first line (L1) to the fifth line (L5), the time, Tm2, during which the light beam (B) travels from the sixth line (L6) to the second line (L2) and the time, Ts, during which the light beam (B) is scanned to the image range (Zs), i.e., it travels between the fifth line (L5) and the sixth line (L6), are also determined by the controller 900.

The controller 900 may be capable of determining the time differences of the output signal from the sensor 800 in real time, and to compare the time differences with other various aforementioned time durations. In this manner, the controller 900 may be able to immediately carry out the controlling operation at the point when the sensor 800 outputs signals, the time differences thereof, matches the conditions expected from observation of the other time durations.

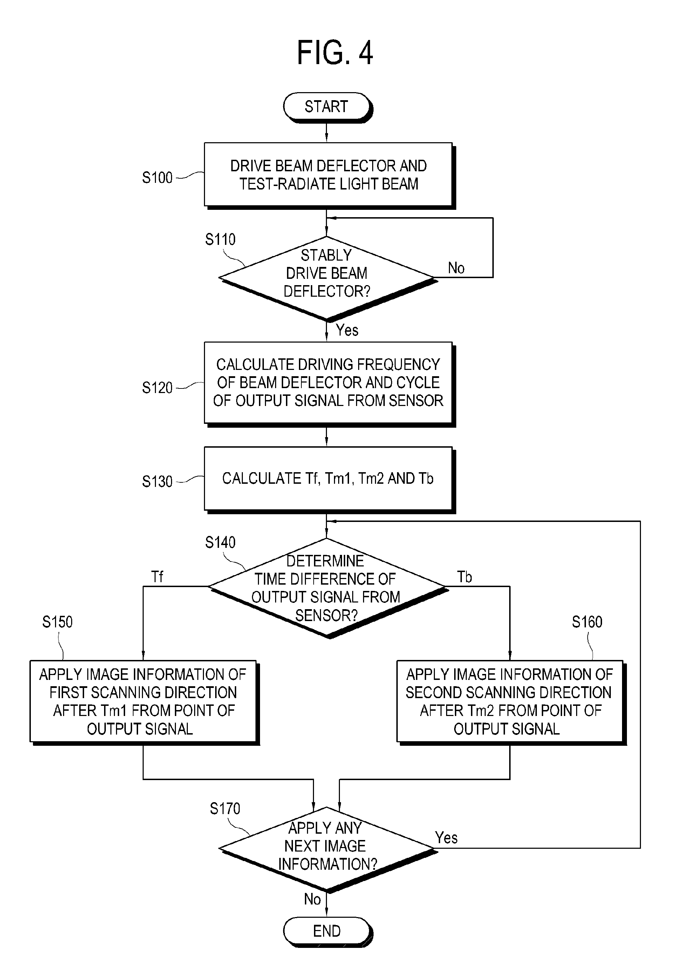

Referring to FIGs. 1 through 4, embodiments of the process of the operation of the light scanning unit 20 to recognizes the scanning direction of the light beam (B), and to apply the image information appropriate with the recognized scanning direction will be described. An initial state refers to the stage of operation when the light scanning unit 20 is idle.

FIG. 3 illustrates plotting of the three factors described below over time during a stable operation of the light scanning unit 20. The three factors are the angle formed between the light path of the light beam (B) from the reference point (Ps) to various points along the scan line (Z) and the reference line (Ls), the cycle of an output signals from the sensor 800, and whether there is an image signal being applied by the controller 900 to the light source 100.

When the light scanning unit 20 starts to operate, the beam deflector 400 begins to be driven and a light beam (B) is radiated from the light source 100 for test radiation in step S100. At this point, the controller 900 does not apply image information to the light source 100.

The controller 900 determines whether the beam deflector 400 has reached a stable operating condition to generate a stable driving frequency in step S110. When the beam deflector 400 is stably driven, the driving frequency of the beam deflector 400 and the cycle of signals output by the sensor 800 are determined in step S120. Then, in step S130, the controller 900 determines each of the time durations, Tf, Tm1, Tm2, Tb, and Ts, based on the expected angle formed between the light path of the light beam (B) and the reference line (Ls) at various locations of the light beam (B), i.e., from the first line (L1) through the sixth line (L6), in relation to the driving frequency of the beam deflector 400 as illustrated in FIG. 3.

For example, as shown in the graph of FIG. 3, when the light beam (B) is located on the reference line (Ls), the angle between the lines is 0 degree. The angle between the lines starts to increase, and when the light beam (B) is located on the first line (L1), the curve reaches the first angle (θ1). When the light beam (B) is located on the third line (L3), the curve reaches the summit. Then, the curve again reaches the first angle (θ1) as the light beam (B) returns to the first line (L1). Thus, the time, Tf, during which the light beam (B) travels from the first line (L1) to the third line (L3) and back to the first line (L1), can be determined.

Similarly, when the curve reaches the second angle (θ2), the light beam (B) is located on the second line (L2). When the light beam (B) reaches the fourth line (L4), this corresponds to the bottom of the curve, and when the light beam returns to the second line (L2), the curve again reaches the second angle (θ2). Thus, the time, Tb, during which the light beam (B) travels from the second line (L2) to the fourth line (L4) and returns to the second line (L2) can be determined.

In one embodiment, the above determination of each of the time durations can be verified in real time by observing the cycle of an output signal from the sensor 800, particularly the output signal patterns. As the light beam is scanned across the scan line (Z), and passes through locations L1 to L3, and back to L1, the sensor 800 produces two output signals (i.e., produces an output signal each time the light beam is located at L1). If the time difference between the two output signals from the sensor 800 is measured to be Tf, the light beam (B) is scanned in the first scanning direction (D1). And when, the next two output signals from the sensor 800 is observed, the time difference between the two output signals are measured and verified against the previously determined value for Tb. If it is verified to be Tb, then the current assumptions as to the determination of the scanning direction is also verified as being correct.

In an alternative embodiment, rather than as a verification process, the foregoing process can be used in step S130 to empirically obtain the values of the time durations, Tf and Tb.

Once the various time durations, Tf, Tm1, Tm2, Tb, and Ts , are determined (and optionally verified), the scanning of the photosensitive body 10 with image data to form thereon an electrostatic latent image can begin. To this end, in step S140, the controller 900 receives the output signals from the sensor 800, and compares the time differences between the output signals with the previously determined values for Tf and Tb.

If the time difference of the output signal from the sensor 800 is determined to be Tf, after an elapse of a time duration Tm1, the light beam (B), which carries image information that is properly ordered to be scanned in the first scanning direction, is scanned for the duration of Ts in the first scanning direction (D1) to form an electrostatic latent image on the photosensitive body in the image range (Zs) in step S150.

If, on the other hand, the time difference between the output signals from the sensor 800 is determined to be Tb, after the time duration, Tm2, the light beam (B) carrying image information in proper order for the second scanning direction (D2) is scanned for the duration of Ts in the second scanning direction (D2) to form an electrostatic latent image on the photosensitive body in the image range (Zs) in step S160.

The beam deflector 400 reciprocally scans the light beam (B) in the first scanning direction (D1) and the second scanning direction (D2), and thus, the foregoing processes (i.e., steps S140 to S160) are repeatedly carried out until such time that the controller 900 determines that there is no more image information to be applied in step S170.

In the embodiment described above, the single sensor 800 and a reflecting member 700 are provided in the light path of the light beam (B) being reciprocally scanned by the beam deflector 400, and are disposed in an asymmetrical arrangement. This produces different output signal patterns of the sensor 800 depending on the scanning direction of the light beam (B). The time differences are observed thereby determining the direction of scanning of the light beam (B).

The time durations determined in step S130 may be used during one printing job for a printing medium or while the beam deflector 400 remains driven at the same frequency. Alternatively, the step S130 may be performed periodically to recalibrate the scanning unit 20.

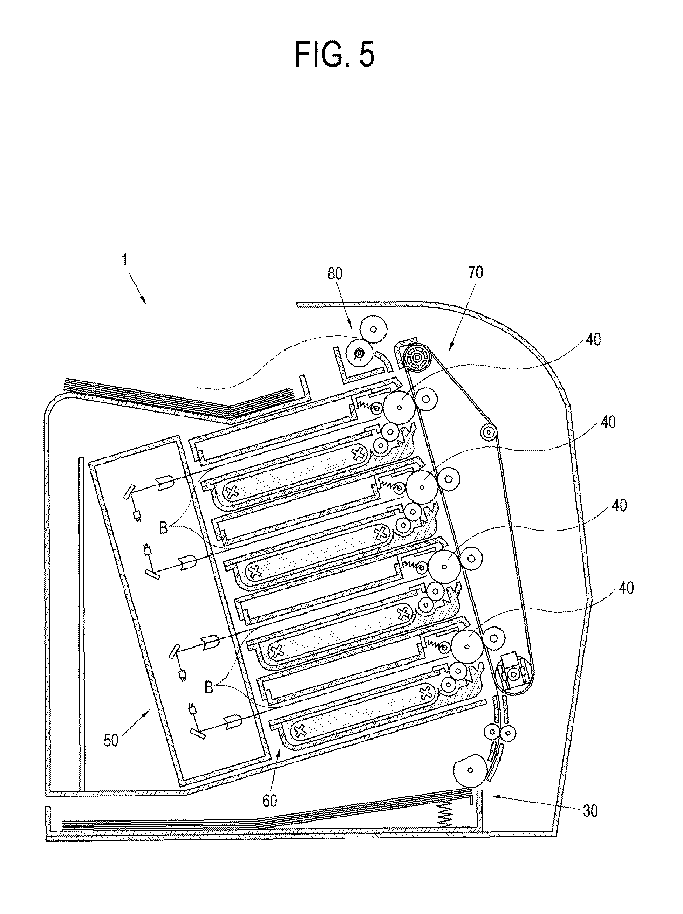

FIG. 5 is a sectional view of an image forming apparatus 1 according to an embodiment. Referring to FIG. 5, the image forming apparatus 1 includes a medium feeding unit 30, on which printing media are stacked, and which feeds a printing medium, a plurality of photosensitive bodies 40 where electrostatic latent images and visible images by a developing agent are formed, a light scanning unit 50 which forms an electrostatic latent image on the photosensitive bodies 40, a developing unit 60 which feeds developing agent to the photosensitive bodies 40, a transferring unit 70 which transfers a visible image from the photosensitive bodies 40 to a printing medium, and a fixing unit 80 which fixes a transferred unfixed visible image on the printing medium.

In this color image forming apparatus example, a plurality of photosensitive bodies 40 are provided, e.g., four bodies corresponding to yellow, magenta, cyan and black, which are sequentially disposed along the passage of a printing medium so as to form color images on a printing medium. The photosensitive bodies 40 are uniformly charged with electricity on their circumferential surface and formed with an electrostatic latent image by generating a potential difference by a light beam (B) from the light scanning unit 50. When developing agent is provided by the developing unit 60 to the photosensitive bodies 40 where the electrostatic latent images are formed, a visible image is formed on the photosensitive body 40. In another embodiment, the image forming apparatus 1 may be a monochromatic, i.e., black and white, image forming apparatus, which would have only one photosensitive body. Each of the photosensitive bodies 40 is substantially the same as the photosensitive body 10 previously described.

The light scanning unit 50 scans a light beam (B) to form electrostatic latent images on the respective photosensitive bodies 40. The light scanning unit 50 may classify the image information of a color image into each of the four colors, and forms electrostatic latent images on the respective photosensitive bodies 40 accordingly. The light scanning unit 50 has substantially the same configuration as the aforementioned light scanning unit 20.

The developing unit 60 is provides developing agent of different colors to the photosensitive bodies 40. Accordingly, visible images of different colors may be formed on the photosensitive bodies 40.

In the transferring unit 70, a printing medium sequentially passes through the photosensitive bodies 40, and accordingly, the visible images that were formed on the photosensitive bodies 40 are transferred to the printing medium as superimposed images of several colors.

The fixing unit 80 fixes the visible images onto the printing medium by applying heat and/or pressure.

As described above, according to the present invention, a scanning direction of a light beam which is reciprocally scanned by a beam deflector can be detected using a single sensor, thereby reducing the manufacturing cost, the size and complexity of the image forming apparatus, and/or the power consumption thereof.

Further, the timing of the scanning of the light beam can be adaptively adjusted according to the possible variations of the driving frequency of the beam deflector as a result of manufacturing imperfections and/or the use over time, and thus an image quality on a printing medium can be ensured.

Although a few exemplary embodiments of the present invention have been shown and described, it will be appreciated by those skilled in the art that changes may be made in these embodiments without departing from the principles of the invention, the scope of which is defined in the appended claims.

## Claims

1. A light scanning unit (20, 50), comprising:
a light source (100) for producing a light beam;
a beam deflector (400) configured to deflect said light beam from said light source such that said deflected light beam is scanned along a scan line across a photosensitive body (10, 40) in a first and second scanning directions (D1, D2); and
a sensor (800) configured to produce an output signal upon sensing of said light beam deflected from said beam deflector, said sensor further being configured to produce a first output signal pattern when said deflected light beam is being scanned in said first scanning direction and a second output signal pattern, different from said first output signal pattern, when said deflected light beam is being scanned in said second scanning direction.

2. The light scanning unit according to claim 1, wherein:
said first output signal pattern comprises two consecutive output signals being a first time duration apart from each other that is different from a second time duration between two consecutive output signals of said second output signal pattern.

3. The light scanning unit according to claim 1 or 2, further comprising:
a controller (900) configured to receive said output signal from said sensor, and to determine whether a scanning direction of said deflected light beam is said first scanning direction or said second scanning direction based on which one of said first output signal pattern and said second output signal pattern is observed, said controller being further configured to control said light source to produce said light beam according to an image information corresponding to said determined scanning direction of said deflected light beam.

4. The light scanning unit according to any preceding claim, wherein said scan line comprises a first range to receive image information and a second range for receiving no image information, said sensor further comprising:
a reflecting member (700) disposed in a light path of said deflected light beam from said beam deflector to a location within said second range of said scan line; wherein
said sensor is configured to sense said deflected light beam both directly from said beam deflector and from said reflecting member.

5. The light scanning unit according to claim 4, wherein:
a first angle formed between a first line and a reference line is different from a second angle formed between a second line and said second reference line, said reference line being a line connecting a reference point at which said light beam is incident on said beam deflector and a center point of said first range of said scan line, said first line extending from said reference point to said sensor, and said second line extending from said reference point to said reflecting member.

6. The light scanning unit according to claim 5, wherein said scan line comprises a third range for receiving no image information, said third range being in an opposite end of said first range from said second range, and wherein:
said sensor is disposed between a third line and a fifth line, said third line extending from said reference point to a first end of said third range furthest away from said first range, said fifth line extending from said reference point to a second end of said third range opposite from said first end of said third range, and
wherein said reflecting member is disposed between a fourth line and a sixth line, said fourth line extending from said reference point to a first end of said second range furthest away from said first range, said sixth line extending from said reference point to a second end of said second range opposite from said first end of said second range.

7. The light scanning unit according to claim 6, wherein:
said controller determines a driving frequency of said beam deflector and a cycle of said output signal from said sensor.

8. The light scanning unit according to claim 7, wherein:
said controller further determines:
a first time duration (Tf) during which said light beam travels from said first line to said third line and back to said first line;
a second time duration (Tm1) during which said light beam travels from said first line to said fifth line;
a third time duration (Tm2) during which said light beam travels from said second line to said; sixth line, and
a fourth time duration (Tb) during which said light beam travels from said second line to said fourth line and back to said second line.

9. The light scanning unit according to claim 8, wherein:
said controller is further configured to determine an observed time duration between two consecutive output signals received from said sensor, and to determine whether said observed time duration is said first duration or said fourth duration.

10. The light scanning unit according to claim 8 or 9, wherein:
said controller is configured to control said light source to produce said light beam to include said image information suitably arranged for being scanned in said first scanning direction if said observed time duration was determined to be said first time duration, and is configured to control said light source to produce said light beam to include said image information suitably arranged for being scanned in said second scanning direction if said observed time duration was determined to be said fourth time duration.

11. The light scanning unit according to any preceding claim, wherein:
said beam deflector comprises a resonant mirror.

12. An image forming apparatus (1) comprising:
a photosensitive body (10, 40); and
a light scanning unit according to any one of claims 1 to 11, wherein said sensor is disposed at a location along said scan line.

13. A method of controlling a light scanning unit (20, 50), comprising:
driving a beam deflector (400) deflect a light beam from a light source (100) such that said deflected light beam is scanned along a scan line in a first scanning direction and a second scanning direction (D1, D2);
receiving from a sensor (800) an output signal pattern, said output signal pattern being one of a first output signal pattern when said deflected light beam is being scanned in said first scanning direction and a second output signal pattern, different from said first output signal pattern, when said deflected light beam is being scanned in said second scanning direction, said output signal pattern being a pattern of an output signal of said sensor in response to sensing of said deflected light beam incident thereon;
determining a scanning direction of said deflected light beam as being one of said first scanning direction and said second scanning direction based on which one of said first output signal pattern and said second output signal pattern is observed; and
controlling said light source to produce said light beam according to an image information corresponding to said determined scanning direction of said deflected light beam.

14. The method as set forth in claim 13, wherein:
said first output signal pattern comprise two consecutive output signals that are a first time duration apart from each other that is different from a second time duration between two consecutive output signals of said second output signal pattern.

15. The method as set forth in claim 13 or 14, further comprising:
determining a driving frequency at which said beam deflector is being driven; and
determining a cycle of said output signal received from said sensor.

16. The method as set forth in claim 15, further comprising:
determining a first time duration and a second time duration based on at least one of said determined driving frequency and said determined cycle of said output signal, said deflected light beam being incident on said sensor two consecutive times within said first time duration when said deflected light beam is to be scanned in said first scanning direction, and said deflected light beam being incident on said sensor two consecutive times within said second time duration when said deflected light beam is to be scanned in said second scanning direction, said first time duration and said second time duration being different from each other.

17. The method as set forth in claim 16, further comprising:
determining a first start time, a second start time and a third time duration based on at least one said determined driving frequency and said determined cycle of said output signal, said first start time representing a first starting point on said scan line where inclusion of said image information in said light beam is to begin when said deflected light beam is scanned in said first scanning direction, said second start time representing a second starting point on said scan line where inclusion of said image information in said light beam is to begin when said deflected light beam is scanned in said second scanning direction, and said deflected light beam traveling from said first starting point and said second starting point during said third time duration.

18. The method as set forth in claim 16 or 17, wherein:
said step of determining said scanning direction comprises determining whether two consecutive output signals of said received output pattern are apart from each other by said first time duration or by said second time duration.

19. The method as set forth in claim 18, wherein:
said step of controlling said light source comprises:
if said two consecutive output signals of said received output pattern were determined to be apart from each other by said first time duration, controlling said light source to be turned on or off according to said image information arranged to be suitable for being scanned in said first scanning direction for said third time duration starting from said first start time, and
if said two consecutive output signals of said received output pattern were determined to be apart from each other by said second time duration, controlling said light source to be turned on or off according to said image information arranged to be suitable for being scanned in said second scanning direction for said third time duration starting from said second start time.
